# EUROPÄISCHE PATENTSCHRIFT

(11) **EP 0 953 723 B1**
(45) Veröffentlichungstag und Bekanntmachung des Hinweises auf die Patenterteilung: **19.03.2003**
(21) Anmeldenummer: 99107744.7
(22) Anmeldetag: 19.04.1999
(51) Int. Cl.: E21B 7/28

(54) **Aufweitvorrichtung**
Enlarging apparatus
Dispositif d'élargissement

(30) Priorität: 22.04.1998 DE 19817872
(43) Veröffentlichungstag der Anmeldung: 03.11.1999
(73) Patentinhaber: Tracto-Technik Paul Schmidt Spezialmaschinen, 57368 Lennestadt (DE)
(72) Erfinder: Püttmann, Franz-Josef, 57368 Lennestadt (DE); Balve, Gerhard, 57368 Lennestadt (DE)
(74) Vertreter: König, Reimar, Dr.-Ing.

(56) Entgegenhaltungen:
- DE-A- 19 608 980
- DE-U- 8 714 724
- US-A- 4 674 914

## Beschreibung

Die Erfindung bezieht sich auf eine Vorrichtung und ein Verfahren zum Aufweiten von Erdbohrungen, beispielsweise einer Pilotbohrung und/oder zum Zerstören erdverlegter Rohrleitungen, mit der sich gleichzeitig eine neue Rohrleitung oder auch ein Kabel in die aufgeweitete Erdbohrung einziehen läßt.

Das grabenlose Verlegen von Leitungen hat in den letzten Jahren in zunehmendem Maße an Bedeutung gewonnen. Dabei hat sich u.a. ein Verfahren durchgesetzt, bei dem mit Hilfe einer stationären Bohrvorrichtung zunächst beispielsweise bis zu einer Zielgrube oder einem Kanalschacht eine Pilotbohrung verhältnismäßig kleinen Durchmessers erstellt, in der Zielgrube der Bohrkopf vom Bohrgestänge entfernt und das Bohrgestänge mit einem das Erdreich bei einer Zurückbewegung des Gestänges zur Bohrvorrichtung aufweitenden und/oder abbauenden Räumwerkzeug mit größerem Durchmesser versehen wird. Ein solches Verfahren ist in der deutschen Patentschrift 42 20 430 beschrieben.

Bekannt sind, beispielsweise aus der deutschen Patentschrift 35 33 995, auch Verfahren und Vorrichtungen, bei denen ein im Erdreich verlegtes Altrohr mit Hilfe eines selbstangetriebenen pneumatischen Rammbohrgeräts zerstört wird. Dabei werden die Rohrscherben und das das Altrohr umgebende Erdreich gleichzeitig zur Seite verdrängt und mit Hilfe des Rammbohrgeräts ein Neurohr eingezogen. Das zerstörende Ersetzen erdverlegter Rohrleitungen läßt sich auch mit Hilfe einer stationären Bohrvorrichtung durchführen, deren Gestänge mit einem das Altrohr zerstörenden Berstkopf versehen ist.

Des weiteren ist es aus der US-Patentschrift 5 580 188 bekannt, ein Gestänge durch eine Altleitung bis zu einer Zielgrube oder bis zu einem vorhandenen Kanalschacht zu schieben und dort mit einem Räumkopf zu versehen, der die Altleitung zerstört und gleichzeitig das die Altleitung umgebende Erdreich aufweitet sowie ein neues Rohr in die aufgeweitete Erdbohrung einzieht.

Schließlich ist aus der deutschen Patentschrift 38 26 513 auch ein Verfahren zum grabenlosen Verlegen von Versorgungsleitungen im Erdreich bekannt, bei dem sich ein Rammbohrgerät auf einer im Erdreich liegenden Altleitung vorwärtsbewegt und dabei das Erdreich aufweitet.

Beim Verlegen von Leitungen in der Horizontalen ist es häufig erforderlich, unter räumlich beengten Verhältnissen zu arbeiten, beispielsweise von einem Kellerraum oder von einem vorhandenen Kanalschacht aus. Das ist jedoch dann nicht möglich, wenn die Länge des Bohrgeräts größer ist als die Abmessungen des zur Verfügung stehenden Raumes. Dieses Problem tritt insbesondere bei der Altrohr- bzw. Kanalsanierung auf, weil der Durchmesser eines Standard-Kanalschachts nur 1 m und der Durchmesser der Schachtöffnung nur etwa 80 cm beträgt. Diese Maße lassen es im allgemeinen nicht zu, die bekannten Bohrvorrichtungen ohne Stemm- und Erdarbeiten auf dem Niveau der zu ersetzenden Altleitung zu installieren.

Probleme ergeben sich aber auch, wenn zunächst eine Startgrube und eine Zielgrube ausgehoben werden müssen, weil das Volumen des dabei zu entfernenden und möglicherweise auch abzutransportierenden Erdreichs von den Abmessungen der Bohrvorrichtung bestimmt wird.

Der Erfindung liegt daher das Problem zugrunde, eine Vorrichtung und ein Verfahren zu schaffen, die ein platzsparendes Aufweiten einer Pilotbohrung oder zerstörendes Ersetzen einer Altleitung erlauben und sich insbesondere in einem Standard-Kanalschacht anwenden lassen.

Die Lösung dieser Aufgabe besteht zunächst in einer Vorrichtung mit einem Werkzeug mit einem Gehäuse, einer axialen Aufnahme für ein Gestänge in dem Werzeuggehäuse und einem in dem Gehäuse angeordneten, an dem Gestänge angreifenden Linearantrieb. Dieser Linearantrieb bewegt das Gehäuse mit dem Werkzeug entlang dem Gestänge, das sich durch eine Pilotbohrung oder durch ein im Erdreich verlegtes Altrohr erstreckt. Dabei weitet das Werkzeug die Pilotbohrung auf, oder es zerstört eine Altleitung und verdrängt die Leitungsscherben, zum Beispiel in das umgebende Erdreich und zieht gleichzeitig oder im weiteren Schritt eine mit dem Gehäuse verbundene Leitung, beispielsweise eine Rohrleitung, ein Schutzrohr oder ein Kabel in die aufgeweitete Erdbohrung ein.

Handelt es sich um ein stationäres Gestänge, dann bewegt sich das Werkzeug kontinuierlich oder schrittweise auf diesem Gestänge in Richtung eines Zielschachts oder eines Zieles, während das Gestänge zunächst in dem mit dem Gehäuse verbundenen Neurohr verbleibt und daraus erst dann entfernt wird, wenn das Werkzeug, vorzugsweise ein Räumkopf die Zielgrube erreicht hat.

Die Vorrichtung läßt sich jedoch auch in der Weise betreiben, daß sich zunächst der Räumkopf um eine bestimmte Strecke vorwärtsbewegt, dann der Linearantrieb im Gehäuse das Gestänge um vorzugsweise dieselbe Strecke in Vorschubrichtung verschiebt und sich sodann der Räumkopf wiederum um vorzugsweise dieselbe Strecke vorwärtsbewegt.

Der Linearantrieb kann aus mehreren, vorzugsweise kreisförmig um das Gestänge bzw. die Gestängeaufnahme angeordneten Vorschubzylindern bestehen, die das Gehäuse mit dem Werkzeug schrittweise oder das Gehäuse mit dem Werkzeug und das Gestänge abwechselnd schrittweise in Richtung des Zielpunkts bewegen. Ebenfalls kann ein Ringzylinder, oder in spezieller Ausführungsvariante auch ein Standardzylinder zum Einsatz kommen, deren Außendurchmesser meistens etwas kleiner ist als der Außendurchmesser der Werkzeuge. Die Vorschubzylinder können sich an dem Gestänge abstützen und bewegen dann beim Ausfahren ihrer Kolbenstangen das Gehäuse mit dem Werkzeug über das feststehende Gestänge. Das Einfahren der Kolbenstangen geschieht hingegen bei ruhendem Gehäuse, so daß sich das Gehäuse mit dem Werkzeug und dem am Gehäuse befestigten Nachziehrohr schrittweise vorwärtsbewegt.

Bei einem in der Vortriebsrichtung nicht fixierten Gestänge besteht hingegen die Möglichkeit, daß die Kolbenstangen der Vorschubzylinder, beispielsweise beim Einfahren im Anschluß an die Vorwärtsbewegung des Räumkopfs das Gestänge mitnehmen und dabei um ein dem Kolbenhub entsprechendes Stück in Vortriebsrichtung bewegen. Dies ist mit dem Vorteil verbunden, daß sich das Gestänge mit dem Gehäuse schrittweise in Vortriebsrichtung bewegt und das mit dem Gehäuse verbundene Nachziehrohr nicht durch das Gestänge beschädigt oder auch verunreinigt werden kann, was insbesondere bei Trinkwasserleitungen von großem Vorteil ist. Ein weiterer Vorteil eines gestängefreien Neurohrs besteht darin, daß es sich gefahrlos mit einer Kanalkamera oder ähnlichen Kontroll- und Meßgeräten befahren läßt.

Als Vorschubzylinder eignen sich besonders gut Hydraulikzylinder, bei denen im Gegensatz zu pneumatischen Vorschubzylindem nicht die Gefahr besteht, daß das Nachziehrohr durch in der Abluft enthaltenden Ölnebel verschmutzt wird. Hydraulikzylinder sind wegen der fehlenden Abluft auch beim Arbeiten in engen Kanalschächten und Startgruben von großem Vorteil; sie entfalten zudem erheblich weniger Lärm als Pneumatikzylinder.

Als Kupplungsmittel zwischen dem Gestänge einerseits sowie dem Gehäuse mit dem Werkzeug und/oder den Kolbenstangen der Vorschubzylinder andererseits eignen sich insbesondere Rastfinger oder Sperrklinken, die sich in der einen Richtung als Anlage beispielsweise gegen die Sprossen eines Leitergestänges legen und so ein Widerlager für das Gehäuse schaffen, während sie in der Gegenrichtung über die Sprossen hinweggleiten. Als Kupplungsmittel kommen aber auch Klemmbacken in Frage, die den Vorteil besitzen, daß sie sich für jede Art von Gestänge eignen; sie brauchen lediglich in etwa der Kontur des jeweiligen Gestänges angepaßt zu sein.

Sperrklinken können auch dazu dienen, das Gestänge in der einen Richtung zu fixieren, wenn sich daran die Kolbenstangen der Vorschubzylinder abstützen, um das Gehäuse mit dem Werkzeug vorwärtszubewegen. In der anderen Richtung läßt sich das Gestänge dann unter einer solchen Sperrklinke vorwärtsbewegen.

Die Erfindung wird nachfolgend anhand von in der Zeichnung dargestellten Ausführungsbeispielen des näheren erläutert. In der Zeichnung zeigen:
- Fig. 1: einen selbstgetriebenen Berst- und Räumkopf mit einem stehenden, d.h. in Längsrichtung fixierten Gestänge,
- Fig. 2: einen Räumkopf mit einem in Vortriebsrichtung beweglichen, in der Gegenrichtung fixierten Wandergestänge,

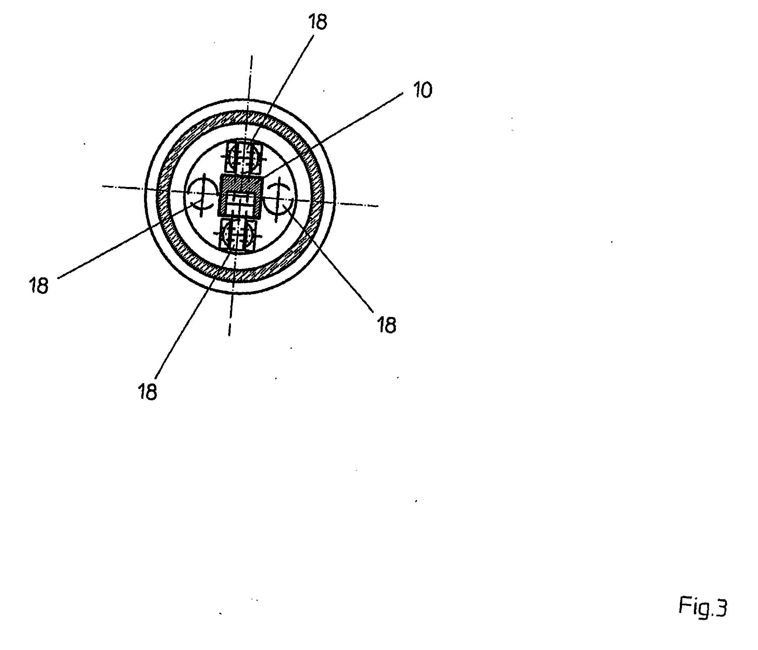

- Fig. 3: einen Schnitt nach der Linie III-III in den Fig. 1 und 2,

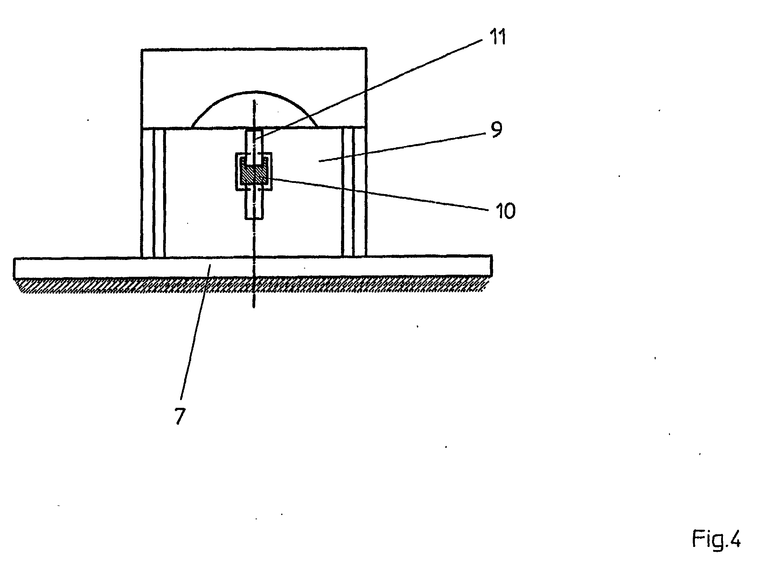

- Fig. 4: eine Draufsicht von vorne auf das Gestänge mit seiner Arretierung in der Zielgrube der Fig. 1,

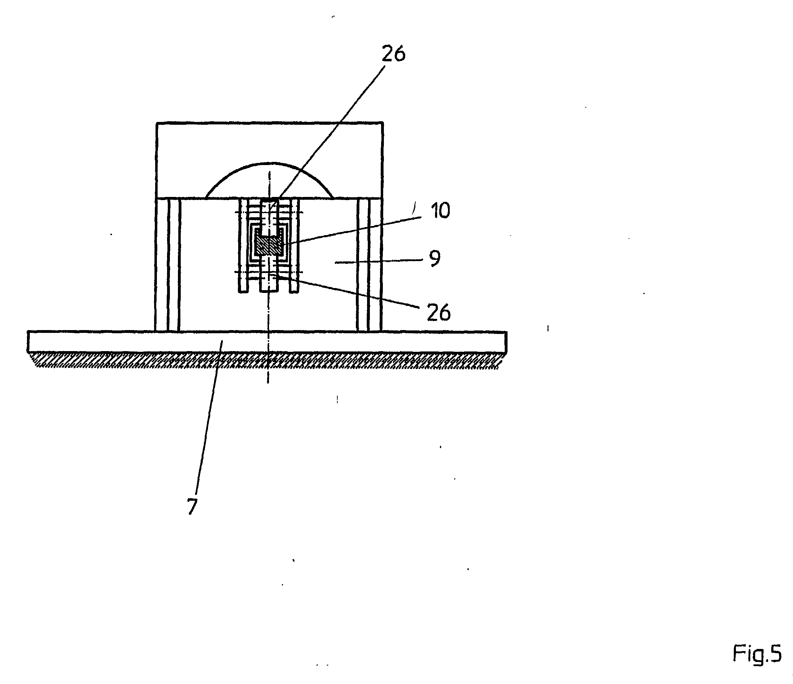

- Fig. 5: eine Draufsicht von vorne auf das Gestänge mit seiner Arretierung in der Zielgrube der Fig. 2,
- Fig. 6: eine oberirdische Lafetten-Bohrvorrichtung mit einem selbstgetriebenen Räumkopf zum Aufweiten einer Pilotbohrung am Ende des Bohrgestänges,
- Fig. 7: eine vergrößerte Darstellung des selbstgetriebenen Räumkopfes der Fig. 6 mit einem Linearantrieb in Gestalt eines Hohlzylinders,
- Fig. 8: den selbstgetriebenen Räumkopf der Fig. 7 mit ausgefahrener Hohlkolbenstange und
- Fig. 9: eine der Fig. 1 entsprechende Darstellung, jedoch mit einem anders gestalteten Räumkopf.

Durch das Erdreich 1 erstreckt sich ein Altrohr 2 zwischen einer Startgrube 3 und einer Zielgrube 4, beispielsweise Standard-Kanalschächten. In dem Altrohr 2 befindet sich ein aus einzelnen Abschnitten 5 bestehendes eingestecktes Gestänge 6, dessen Einzelheiten in der deutschen Offenlegungsschrift 196 08 980 beschrieben sind.

In der Zielgrube 4 befindet sich ein im Querschnitt L-förmiger Rahmen 7, der mit Hilfe eines Erdnagels 8 im Erdreich verankert ist. Auf der Bodenplatte des Rahmens 7 ist eine Widerlagerplatte 9 angeordnet, durch die sich der vordere Abschnitt 5 des Gestänges 6 erstreckt. Zwischen einer Sprosse 10 und der Widerlagerplatte 9 befindet sich ein L-förmiger Arretierkeil 11, der eine Bewegung des Gestänges 6 in der Richtung von der Zielgrube 4 zur Startgrube 3 verhindert.

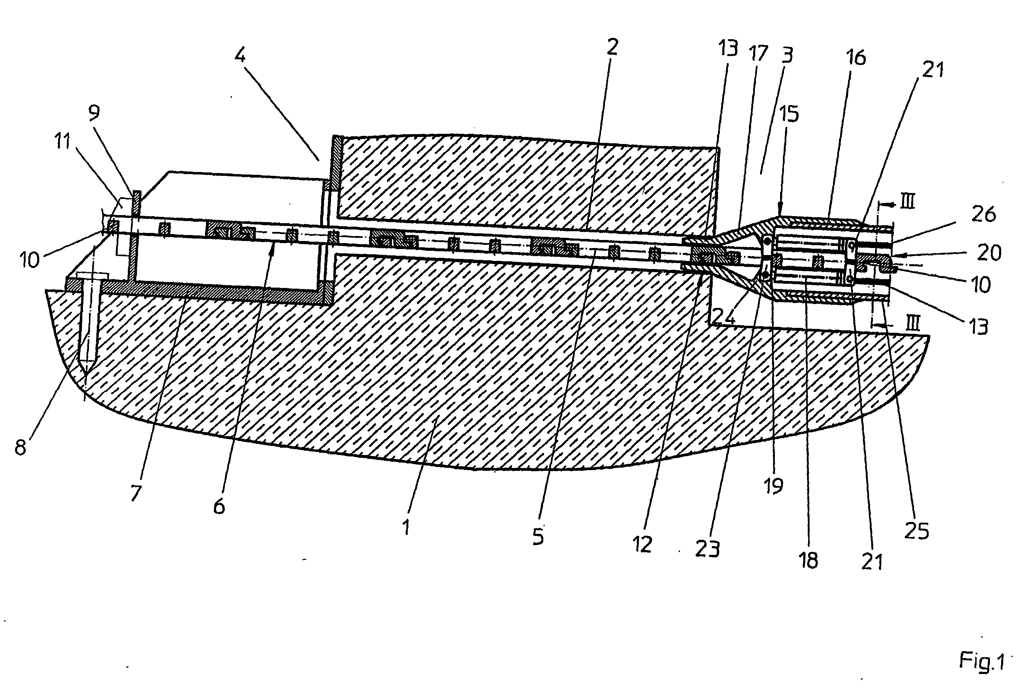

In der Startgrube 3 ist ein selbstangetriebener Berst- und Räumkopf 15 mit einem Gehäuse 16 angeordnet, dessen vorderes Ende 12 offen ist und teils als Zylinder 13, teils als Konus 17 ausgebildet ist; er dient als Werkzeug zum Zerstören der Altleitung 2 und zum Aufweiten des Erdreichs 1. Der Räumkopf 15 kann mit Gleit- und/oder Spülmitteldüsen ausgestattet sein. Im Innern des Gehäuses 16 sind kranzförmig um das Gestänge 6 herum mehrere doppelwirkende hydraulische Vorschubzylinder 18 angeordnet, deren Kolbenstangen sich an einem Bund 19 des Gehäuses abstützen. Das vorne offene Gehäuse 16 bildet mit den Vorschubzylindem 18 einen Durchlaß 20 für das Gestänge 6. Die Vorschubzylinder 18 sind mit federbelasteten verschwenkbaren Sperrklinken 21 versehen, die entsprechend der zeichnerischen Darstellung in Fig. 1 an einer Sprosse 10 des Gestänges 6 einerseits und an einem Anschlag 22 der Kolbenstange andererseits anliegen. Die obere Sperrklinke 21 vermag sich entgegen dem Uhrzeigersinn und die untere Sperrklinke 21 im Uhrzeigersinn zu drehen.

Wenn sich die Sperrklinken so verstellen lassen, daß sich ihre Wirkungsrichtung umkehrt, läßt sich der Berst- und Räumkopf ohne weiteres auch entgegen der Vortriebsrichtung bewegen.

In dem Bund 19 sind ebenfalls Sperrklinken 23 gelagert, die einerseits an einer Sprosse 10 des Gestänges 6 und andererseits an einem Gehäuseanschlag 24 anliegen. Die obere Sperrklinke 23 vermag sich entgegen dem Uhrzeigersinn, die untere Sperrklinke 21 im Uhrzeigersinn über eine Sprosse 10 hinwegzudrehen.

Mit dem Gehäuse 16 ist ein Nachziehrohr 25 verbunden, durch das Druckmittelleitungen 26 zu den Vorschubzylindern 18 geführt sind.

Der geringe Durchmesser des Berst- und Räumkopfes erlaubt einen Einsatz kurz über dem Boden, so daß er in einem Standard-Kanalschacht keine aufwendigen Stemmarbeiten erfordert.

Um das Altrohr 2 mit dem Werkzeug 15, das aus zwei Aufsteckkonen bestehen kann, zu zerstören und gleichzeitig die Rohrscherben mit dem das Altrohr umgebenden Erdreich zur Seite zu verdrängen, werden die Vorschubzylinder 18 über die Druckölleitungen 26 mit Drucköl beaufschlagt, so daß deren über die Sperrklinken 21 an einer Gestängesprosse 10 abgestützten Kolbenstangen ausfahren. Da sich das Gestänge 6 infolge des durch den Arretierkeil 11 geschaffenen Widerlagers nicht in Richtung der Startgrube 3 zu bewegen vermag, bewegt sich beim Ausfahren der Kolbenstangen der Räumkopf 15 um ein dem Kolbenstangenhub entsprechendes Stück in Richtung der Zielgrube 4. Dabei gleiten die Sperrklinken 23 über die in der Vorschubrichtung vor ihnen befindlichen Gestängesprossen 10, während die Sperrklinken 21 als Widerlageranschläge fungieren und in der in Fig. 1 dargestellten Lage verbleiben, bis die Kolbenstangen voll ausgefahren sind. In einem zweiten Arbeitsschritt werden die Kolbenstangen wieder eingefahren, wobei nunmehr die Sperrklinken 21 über die in Vortriebsrichtung vor ihnen befindlichen Gestängesprossen 10 gleiten, während die Sperrklinken 23 in der in Fig. 1 dargestellten Lage verbleiben und zusammen mit der ihnen benachbarten Gestängesprosse 10 als Widerlager für die Einfahrbewegung der Kolbenstangen dienen.

Die zuvor geschilderten beiden Arbeitsschritte wiederholen sich in einem ständigen Wechsel, bis der Berst- und Räumkopf 15 in der Zielgrube 4 oberhalb der Bodenplatte angelangt und das vordere Ende des Nachziehrohrs 24 in der Zielgrube 4 angekommen ist. In dieser Lage läßt sich der Räumkopf mühelos in dem Freiraum zwischen der Widerlagerplatte 9 und der Gruben- bzw. Schachtwandung ausbauen.

Die Länge der Gestängeabschnitte 5 entspricht in etwa der Länge des Räumkopfs 15, so daß die Startgrube 3 und die Zielgrube 4 in der Vortriebsrichtung nicht viel größer zu sein brauchen, weil sich die Gestängeabschnitte 5 senkrecht zuführen und über eine einfache Steckverbindung durch Einklinken miteinander verbinden lassen, wie dies im einzelnen die deutsche Offenlegungsschrift 196 08 980 beschreibt, die als Bestandteil der vorliegenden Beschreibung gilt.

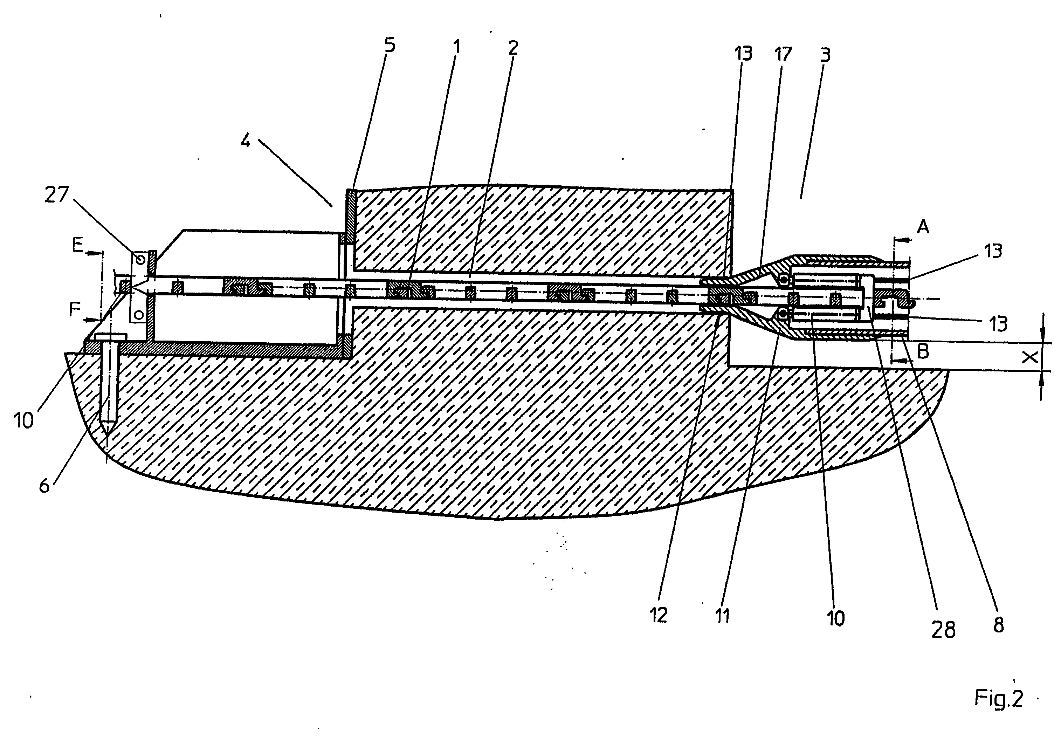

Bei dem Ausführungsbeispiel der Fig. 2 kommt ein Wandergestänge 6 zur Verwendung, das entgegen der Vortriebsrichtung fixiert ist, sich aber in der Vortriebsrichtung schrittweise verschieben läßt. Dazu sind an der Widerlagerplatte 9 zwei einander gegenüberliegende Sperrklinken 27 angeordnet, die in der dargestellten Lage als Anschlag für die in Vortriebsrichtung vor ihnen befindliche Gestängesprosse 10 dienen und bei einer Gestängebewegung in Vortriebsrichtung über die in Vortriebsrichtung vor ihnen liegenden Gestängesprossen 10 hinweggleiten.

Bei dem Räumkopf 15 der Fig. 2 sind die Vorschubzylinder 18 nicht mit Sperrklinken 27 versehen, sondern über Klemmbacken 28 oder auch bleibend mit dem Gestänge 6 verbunden. Demzufolge bewegt sich beim Ausfahren der Kolbenstangen der Räumkopf 15 auf dem an den Sperrklinken 27 abgestützten und daher feststehenden Gestänge 6 einen Schritt vorwärts in Richtung der Zielgrube 4, bis die Kolbenstangen voll ausgefahren sind. Am Ende dieses ersten Arbeitsschrittes befindet sich der Räumkopf 15 zumindest teilweise im Erdreich, in dem er aufgrund der Wandungsreibung derart fixiert ist, daß er als Widerlager fungiert, wenn die Kolbenstangen beim Einfahren, d.h. bei jedem Leerhub das Gestänge 6 in Vortriebsrichtung mitnehmen. Dies ist möglich, weil sich die Gestängesprossen 10 in der Zielgrube in Vortriebsrichtung zwischen den Sperrklinken 27 hindurchbewegen können, bis die Kolbenstangen voll eingefahren sind und sich der erste Arbeitsschritt wiederholt.

Das zuvor beschriebene Wechselspiel zwischen Räumkopfvortrieb bei feststehendem Gestänge 6 und ausfahrenden Kolbenstangen einerseits sowie Gestängevortrieb bei feststehendem Räumkopf 15 während des Einfahrens der Kolbenstangen andererseits wiederholt sich, bis der Räumkopf 15 in der Zielgrube 4 angelangt ist.

Der erfindungsgemäße selbstgetriebene Räumkopf eignet sich nicht nur zum Zerstören einer Altleitung, sondern auch zum Aufweiten einer Pilotbohrung.

Eine solche Pilotbohrung läßt sich mit Hilfe einer Bohrvorrichtung herstellen, die aus einem Raupenfahrwerk 28 mit einer Lafette 29, einem verfahrbaren Dreh-Schub-Antrieb 30 und einer Klemmbacken-Arretierung 31 besteht. Mit Hilfe eines hohlen Bohrgestänges 32 aus einzelnen Gestängeabschnitten wird in einem ersten Arbeitsschritt zunächst im Wege einer Schräg-Horizontal-Bohrung von der Erdoberfläche aus eine Pilotbohrung 33 bis zu einer nicht dargestellten Zielgrube hergestellt. In der Zielgrube wird der Bohrkopf vom Bohrgestänge 32 entfernt und durch einen Räumkopf 34 (Backreamer) ersetzt. Das Gehäuse 35 des Räumkopfs 34 ist mit einem Nachziehrohr 25 verbunden und enthält einen Hydraulikzylinder 36, der auf dem Stirnflansch 37 einer mit dem Gehäuse 35 einteiligen hohlen Kolbenstange 38 geführt ist. Der Boden des Hydraulikzylinders 36 ist verdrehfest mit dem Hohlgestänge 32 verbunden, das in Bodennähe eine Queröffnung 39 zu einem vor dem Flansch 37 befindlichen Zylinderraum 40 besitzt und durch die Hohlkolbenstange 38 geführt ist, die so als Gestängeaufnahme fungiert.

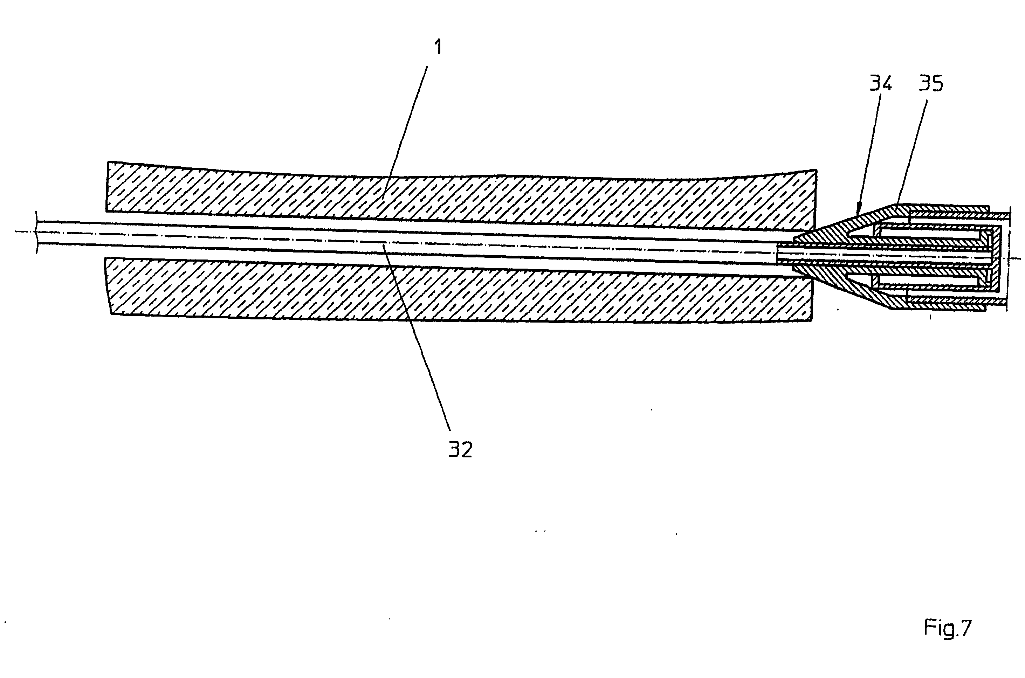

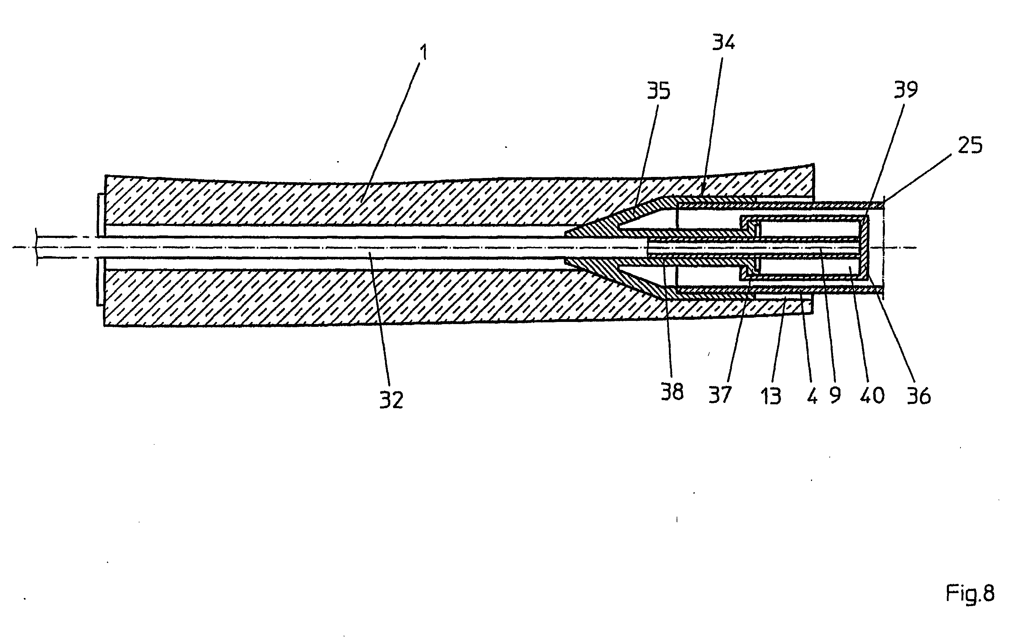

Strömt von einer nicht dargestellten Druckmittelquelle Drucköl durch das Bohrgestänge und von dort durch die Querbohrung 39 in den Zylinderraum 40, dann bewegt sich der Räumkopf 34,35 aus seiner Lage nach Fig. 7 in das Erdreich hinein (Fig. 8), wenn das Bohrgestänge durch die Arretierung 31 axial festgelegt ist. Sobald der Räumkopf 34 die Lage gemäß Fig. 8 erreicht hat, gibt die Arretierung 31 das Gestänge frei, das sodann mit Hilfe der Lafetten-Bohrvorrichtung 28,29,30 aus der Pilotbohrung herausbewegt wird, bis der Hohlkolben wiederum seine Lage nach Fig. 7 erreicht hat. Danach werden die Klemmbacken den Arretierung 31 wieder betätigt und der Hydraulikzylinder 39 erneut mit Drucköl beaufschlagt, bis er völlig ausgefahren ist. Dieses Wechselspiel von Räumkopfvortrieb bei feststehendem Bohrgestänge 32 einerseits und Bohrgestängerückbewegung in Vortriebsrichtung bzw. in Richtung der Bohrvorrichtung 28,29,30 bei vom Erdreich 1 festgehaltenem Räumkopf andererseits wiederholt sich, bis der Räumkopf 34 an der Erdoberfläche angelangt ist.

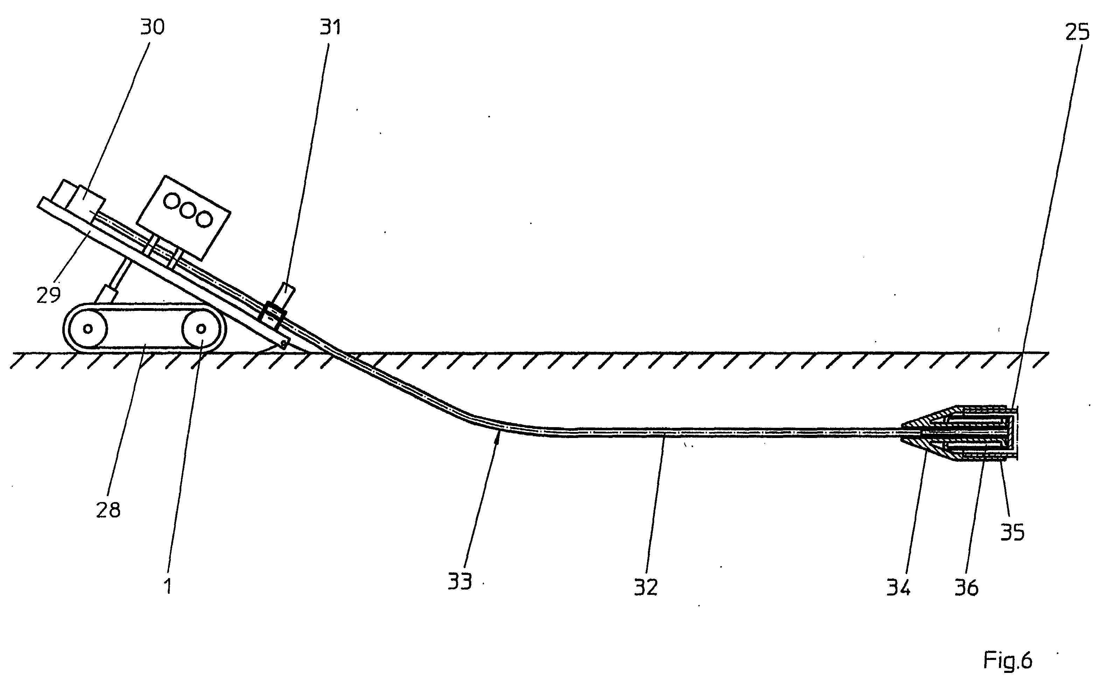

Bei den Ausführungsbeispielen der Fig. 6 bis 8 besteht aber auch die Möglichkeit, das Gestänge 32 gleichzeitig nach dem Ausfahren des Hohlzylinders 36 zurückzuziehen, wenn die Zugkraft der Bohrvorrichtung 28, 29, 30 nicht ausreicht.

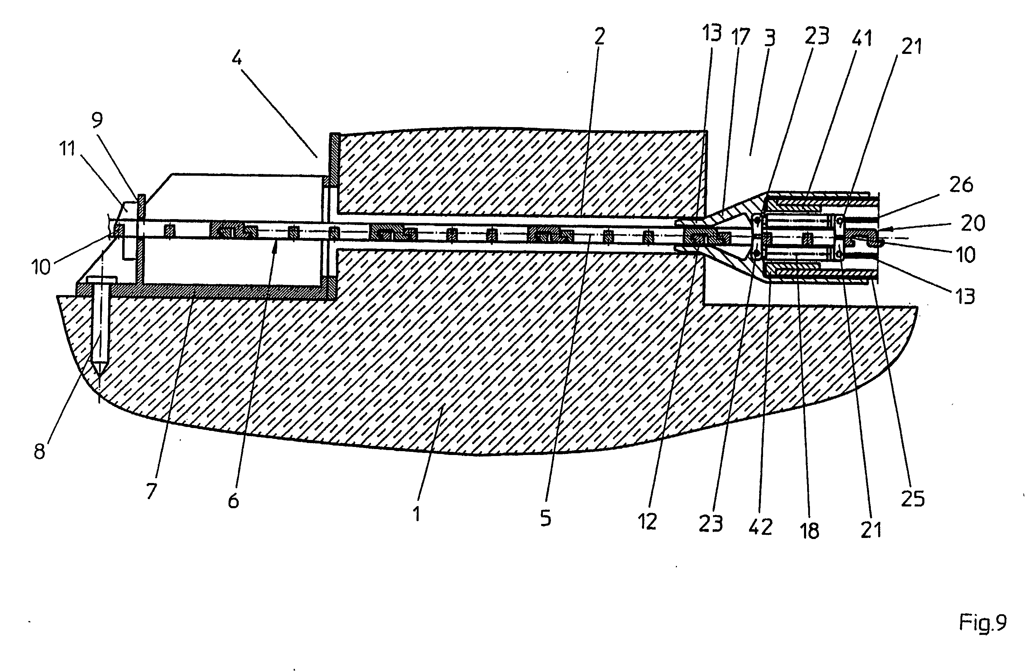

Der in Fig. 9 dargestellte Räumkopf ist im Prinzip so aufgebaut wie der Räumkopf 15 der Fig. 1, jedoch ist in diesem Fall das Nachziehrohr 25 nicht mit dem Gerätegehäuse 16, sondern mit einer im Gehäuse 16 angeordneten Gleithülse 41 verbunden. Die Gleithülse 41 besitzt einen Flansch 42, an dem die Stirnfläche des Nachziehrohrs 25 anliegt. Der Flansch 42 ist in dem Gehäuse 16 geführt, so daß sich beim Ausfahren der Kolbenstangen der Räumkopf 15 über das feststehende Gestänge 6 nach links in das Erdreich 1 bewegt, während die Hydraulikzylinder 18 mit der Gleithülse 41 und dem Nachziehrohr ihre Lage nicht verändern. Nachdem die Kolbenstangen ausgefahren sind, kehren sie in ihre Ausgangslage zurück, wobei sich der Räumkopf 15 nicht bewegt, aber die Hydraulikzylinder 18 mit der Gleithülse 41 und dem Nachziehrohr 25 in das Räumkopfgehäuse 16 hineingezogen werden. Auf diese Weise werden jeweils abwechselnd der Räumkopf 15 und das Nachziehrohr 25 in Vortriebsrichtung bewegt.

Die erfindungsgemäßen Räumköpfe brauchen nicht mit Hydrauliköl betrieben zu werden. Hierfür eignet sich auch eine Bohr- oder Spülmittelsuspension, die über Düsen am Räumkopf austritt.

## Patentansprüche

1. Vorrichtung zum Aufweiten von Erdbohrungen und/oder zum Zerstören erdverlegter Rohrleitungen (2) sowie zum Verlegen neuer Rohrleitungen (25) mit
- einem Werkzeug (17;34) mit
- einem Werkzeuggehäuse (16; 35),
- einer axialen Aufnahme für ein Gestänge (6) in dem Werkzeuggehäuse (16;35) und **dadurch gekennzeichnet, daß**
- ein an dem Gestänge angreifender Linearantrieb (18) im Werkzeuggehäuse angeordneten ist.

2. Vorrichtung nach Anspruch 1, **dadurch gekennzeichnet, daß** die Gestängeaufnahme als Durchlaß (20) ausgebildet ist.

3. Vorrichtung nach Anspruch 1 oder 2, **dadurch gekennzeichnet, daß** der Linearantrieb aus mindestens einem Vorschubzylinder (18;36) besteht.

4. Vorrichtung nach einem der Ansprüche 1 bis 3, **dadurch gekennzeichnet, daß** der Vorschubzylinder (18) parallel zur Gestängeachse (20) angeordnet ist.

5. Vorrichtung nach einem der Ansprüche 1 oder 3, **dadurch gekennzeichnet, daß** der Linearantrieb aus einer mit dem Durchlaß (20) fluchtenden hydraulischen Hohlzylindereinheit (36,37,38) besteht.

6. Vorrichtung nach einem der Ansprüche 1 bis 5, **dadurch gekennzeichnet, daß** das Gehäuse (16) mit einem Widerlager (19) und der Linearantrieb (18) mit in Richtung des Gestänges (6) wirksamen Kupplungsmitteln (21,24) versehen ist.

7. Vorrichtung nach Anspruch 6, **dadurch gekennzeichnet, daß** die Kupplungsmittel aus Sperrklinken (21,23) bestehen.

8. Vorrichtung nach Anspruch 6, **dadurch gekennzeichnet, daß** die Kupplungsmittel aus Klemmbacken (28) bestehen.

9. Vorrichtung nach einem der Ansprüche 1 bis 7, **gekennzeichnet durch** ein Gestänge (6) mit Vorsprüngen und/oder Ausnehmungen.

10. Vorrichtung nach einem oder mehreren der Ansprüche 1 bis 8, **gekennzeichnet durch** ein Widerlager (9,11) am Ende des Gestänges (6).

11. Vorrichtung nach Anspruch 10, **dadurch gekennzeichnet, daß** das Gestängewiderlager (9,11) mit einer lösbaren Gestängeverriegelung (11) versehen ist.

12. Vorrichtung nach Anspruch 9, **dadurch gekennzeichnet, daß** das Gestänge (6) als Zahnstange ausgebildet ist.

13. Vorrichtung nach Anspruch 9, **dadurch gekennzeichnet, daß** das Gestänge (6,10) leiterartig ausgebildet ist.

14. Vorrichtung nach Anspruch 9, **dadurch gekennzeichnet, daß** das Gestänge (6) Ring- oder Spiralnuten aufweist.

15. Vorrichtung nach Anspruch 1, **dadurch gekennzeichnet, daß** der Gehäusedurchlaß aus einer Kolbenstange (38) besteht, auf der ein Hydraulikzylinder (36) geführt ist.

16. Vorrichtung nach Anspruch 15, **dadurch gekennzeichnet, daß** der Boden des Hydraulikzylinders (36) mit einem durch den Gehäusedurchlaß (38) geführten Druckmittelgestänge (32) mit einer radialen Druckmittelöffnung (39) verbunden ist.

17. Vorrichtung nach Anspruch 15 oder 16, **gekennzeichnet durch** ein Widerlager (31) für das Gestänge (32).

18. Vorrichtung nach einem der Ansprüche 15 bis 17, **dadurch gekennzeichnet, daß** das Gestänge (32) an dem dem Werkzeug (34) gegenüberliegenden Ende mit einem Dreh- und/oder Schlag- und/oder Schubantrieb (30) versehen ist.

19. Vorrichtung nach einem der Ansprüche 1 bis 18, **dadurch gekennzeichnet, daß** das Werkzeuggehäuse (16,17;35) mit Hartmetalleinsätzen versehen ist.

20. Vorrichtung nach einem der Ansprüche 1 bis 19, **dadurch gekennzeichnet, daß** das Gehäuse (16,17;35) mit Öffnungen zum Abfördern des Erdreichs versehen ist.

21. Vorrichtung nach einem der Ansprüche 1 bis 20, **dadurch gekennzeichnet, daß** das Gehäuse (16,17;35) mit einem Vergrößerungsaufsatz versehen ist.

22. Vorrichtung nach einem der Ansprüche 1 bis 21, **dadurch gekennzeichnet, daß** das Gehäuse (16,17;35) mit an eine Druckmittelleitung angeschlossenen Düsen versehen ist.

23. Vorrichtung nach einem der Ansprüche 1 bis 22, **gekennzeichnet durch** ein mit dem Gehäuse (16;35) verbundenes Nachziehrohr (25).

24. Vorrichtung nach einem oder mehreren der Ansprüche 1 bis 22, **dadurch gekennzeichnet, daß** in dem Gehäuse (16,35) eine Hülse (41) geführt ist, mit der ein Nachziehrohr (25) verbunden ist.

25. Verfahren zum Herstellen oder Aufweiten von Erdbohrungen und/oder zum Zerstören erdverlegter Rohrleitungen sowie zum Verlegen neuer Leitungen, **dadurch gekennzeichnet, daß** von einem Startpunkt aus durch eine Pilotbohrung oder eine Rohrleitung ein Führungsgestänge bis zu einem Zielort vorgeschoben, an einem Ende arretiert und am gegenüberliegenden Ende intermittierend mit einem Werkzeug verbunden wird und sich das Werkzeug schrittweise auf dem Führungsgestänge vorwärtsbewegt.

26. Pilgerschrittverfahren zum Herstellen oder Aufweiten von Erdbohrungen und/oder zum Zerstören erdverlegter Rohrleitungen sowie zum Verlegen neuer Leitungen, **dadurch gekennzeichnet, daß** durch eine Pilotbohrung oder eine Rohrleitung ein Zuggestänge bis zu einem Zielort vorgeschoben, an einem Ende arretiert, am gegenüberliegenden Ende mit einem Werkzeug ausgerüstet wird und das Werkzeug auf dem Führungsgestänge wiederholt ein Stück vorgeschoben, die Arretierung gelöst und das Gestänge wiederholt um das Verschiebestück axial aus dem Werkzeug bewegt wird.

27. Verfahren nach einem der Ansprüche 25 oder 26, **dadurch gekennzeichnet, daß** das Werkzeug gedreht wird.

28. Verfahren nach einem der Ansprüche 25 bis 27, **dadurch gekennzeichnet, daß** das Werkzeug von einem Vibrations- und/oder Schlaggerät beaufschlagt wird.

## Claims

1. Device for widening bores through the ground and/or for destroying pipes (2) laid in the ground and for laying new pipes (25), having
- a tool (17; 34) having
- a tool shell (16; 35),
- axial means for receiving a rod-string (6) in the tool shell (16; 35), and **characterised in that**
- a linear drive (18) engaging with the rod-string is arranged in the tool housing.

2. Device according to claim 1, **characterised in that** the receiving means for the rod-string is in the form of a passage (20).

3. Device according to claim 1 or 2, **characterised in that** the linear drive comprises at least one thrust cylinder (18; 36).

4. Device according to one of claims 1 to 3, **characterised in that** the thrust cylinder (18) is arranged parallel to the axis (20) of the rod-string.

5. Device according to one of claims 1 to 3, **characterised in that** the linear drive comprises a hydraulic hollow cylinder unit (36, 37, 38) which lines up with the passage (20).

6. Device according to one of claims 1 to 5, **characterised in that** the shell (16) is provided with an abutment (19) and the linear drive (18) is provided with coupling means (21, 24) which act in the direction of the rod-string (6).

7. Device according to claim 6, **characterised in that** the coupling means comprise locking pawls (21, 23).

8. Device according to claim 6, **characterised in that** the coupling means comprise clamping jaws (28).

9. Device according to one of claims 1 to 7, **characterised by** a rod-string (6) having projections and/or recesses.

10. Device according to one or more of claims 1 to 8, **characterised by** an abutment (9, 11) at the end of the rod-string (6).

11. Device according to claim 10, **characterised in that** the rod-string abutment (9, 11) is provided with releasable rod-string locking means (11).

12. Device according to claim 9, **characterised in that** the rod-string (6) is in the form of a toothed rack.

13. Device according to claim 9, **characterised in that** the rod-string (6, 10) is of a ladder-like form.

14. Device according to claim 9, **characterised in that** the rod-string (6) has annular or spiral grooves.

15. Device according to claim 1, **characterised in that** the passage in the shell comprises a piston rod (38) on which a hydraulic cylinder (36) is guided.

16. Device according to claim 15, **characterised in that** the bottom of the hydraulic cylinder (36) is connected to a rod-string (32) for pressurised medium, which rod-string (32) runs through the passage (38) in the shell and has a radial opening (39) for pressurised medium.

17. Device according to claim 15 or 16, **characterised by** an abutment (31) for the rod-string (32).

18. Device according to one of claims 15 to 17, **characterised in that**, at the end opposite to the tool (34), the rod-string (32) is provided with a rotary and/or impact and/or thrust drive (30).

19. Device according to one of claims 1 to 18, **characterised in that** the tool shell (16, 17; 35) is provided with cemented carbide inserts.

20. Device according to one of claims 1 to 19, **characterised in that** the shell (16, 17; 35) is provided with openings for feeding away the earth.

21. Device according to one of claims 1 to 20, **characterised in that** the shell (16, 17; 35) is provided with an enlarging cap.

22. Device according to one of claims 1 to 21, **characterised in that** the shell (16, 17; 35) is provided with nozzles connected to a line for pressurised medium.

23. Device according to one of claims 1 to 22, **characterised by** a towed pipe (25) connected to the shell (16; 35).

24. Device according to one or more of claims 1 to 22, **characterised in that** guided in the shell (16, 35) is a sleeve (41) to which a towed pipe (25) is connected.

25. Method of producing or widening bores through the ground and/or for destroying pipes laid in the ground and for laying new pipes, **characterised in that** a guiding rod-string is fed through a pilot bore or a pipe from a starting point to a target point, is locked at one end and at the opposite end is connected intermittently to a tool and the tool is moved forward step by step on the rod-string.

26. Alternating stepped advance method of producing or widening bores through the ground and/or for destroying pipes laid in the ground and for laying new pipes, **characterised in that** a traction rod-string is fed through a pilot bore or a pipe to a target point, is locked at one end, is fitted with a tool at the opposite end, the tool is repeatedly fed forward by an amount on the rod-string, the locking is released and the rod-string is repeatedly moved out of the tool axially by the amount of displacement.

27. Method according to either of claims 25 and 26, **characterised in that** the tool is rotated.

28. Method according to one of claims 25 to 27, **characterised in that** the tool is acted on by a vibratory and/or impact device.

## Revendications

1. Dispositif d'élargissement de sondages et/ou de destruction de conduites (2) enterrées ainsi que de pose de nouvelles conduites (25) pourvu
d'un outil (17 ; 34) avec un carter d'outil (16 ; 35),
d'un logement axial pour une tige (6) dans le carter d'outil (16 ; 35) et **caractérisé en ce qu'**
une commande linéaire (18) agissant sur la tige est disposée dans le carter d'outil.

2. Dispositif selon la revendication 1, **caractérisé en ce que** le logement de la tige est formé en tant que passage (20).

3. Dispositif selon la revendication 1 ou 2, **caractérisé en ce que** la commande linéaire se compose d'au moins un cylindre poussoir (18 ; 36).

4. Dispositif selon l'une quelconque des revendications 1 à 3, **caractérisé en ce que** le cylindre poussoir (18) est disposé parallèlement à l'axe de la tige (20).

5. Dispositif selon l'une quelconque des revendications 1 ou 3, **caractérisé en ce que** la commande linéaire se compose d'une unité de cylindre creux hydraulique (36, 37, 38) en alignement avec le passage (20).

6. Dispositif selon l'une quelconque des revendications 1 à 5, **caractérisé en ce que** le carter (16) est pourvu d'un palier de butée (19) et la commande linéaire (18) de moyens d'accouplement (21, 24) actifs dans le sens de la tige (6).

7. Dispositif selon la revendication 6, **caractérisé en ce que** les moyens d'accouplement se composent de cliquets d'arrêt (21, 23).

8. Dispositif selon la revendication 6, **caractérisé en ce que** les moyens d'accouplement se composent de mâchoires (28).

9. Dispositif selon l'une quelconque des revendications 1 à 7, **caractérisé par** une tige (6) pourvue de saillies et/ou de creux.

10. Dispositif selon l'une quelconque ou plusieurs des revendications 1 à 8, **caractérisé par** un palier de butée (9, 11) à l'extrémité de la tige (6).

11. Dispositif selon la revendication 10, **caractérisé en ce que** le palier de butée de la tige (9, 11) est pourvu d'un dispositif de verrouillage de la tige (11) détachable.

12. Dispositif selon la revendication 9, **caractérisé en ce que** la tige (6) est formée en tant que crémaillère.

13. Dispositif selon la revendication 9, **caractérisé en ce que** la tige (6, 10) est en forme d'échelle.

14. Dispositif selon la revendication 9, **caractérisé en ce que** la tige (6) comporte des rainures circulaires ou en spirale.

15. Dispositif selon la revendication 1, **caractérisé en ce que** le passage du carter se compose d'une tige de piston (38) sur laquelle est guidé un cylindre hydraulique (36).

16. Dispositif selon la revendication 15, **caractérisé en ce que** le fond du cylindre hydraulique (36) est relié à une tige de pression (32) guidée à travers le passage du carter (38) et comportant une ouverture radiale du moyen de pression (39).

17. Dispositif selon la revendication 15 ou 16, **caractérisé par** un palier de butée (31) pour la tige (32).

18. Dispositif selon l'une quelconque des revendications 15 à 17, **caractérisé en ce que** la tige (32) est pourvue d'une commande tournante et/ou à percussion et/ou d'un servomoteur (30) à l'extrémité opposée à l'outil (34).

19. Dispositif selon l'une quelconque des revendications 1 à 18, **caractérisé en ce que** le carter de l'outil (16, 17 ; 35) est pourvu d'inserts en métal dur.

20. Dispositif selon l'une quelconque des revendications 1 à 19, **caractérisé en ce que** le carter (16, 17 ; 35) est pourvu d'ouvertures pour évacuer la terre.

21. Dispositif selon l'une quelconque des revendications 1 à 20, **caractérisé en ce que** le carter (16, 17 ; 35) est pourvu d'un dispositif d'agrandissement.

22. Dispositif selon l'une quelconque des revendications 1 à 21, **caractérisé en ce que** le carter (16, 17 ; 35) est pourvu de buses fixées à une conduite du moyen de pression.

23. Dispositif selon l'une quelconque des revendications 1 à 22, **caractérisé par** un tuyau de traînage (25) relié au carter (16 ; 35).

24. Dispositif selon l'une quelconque ou plusieurs des revendications 1 à 22, **caractérisé en ce qu'**un manchon (41) est guidé dans le carter (16 ; 35) auquel le tuyau de traînage (25) est relié.

25. Procédé destiné à la fabrication ou à l'élargissement de sondages et/ou à la destruction de conduites enterrées ainsi qu'à la pose de nouvelles conduites, **caractérisé en ce qu'**une tige de guidage est poussée à partir d'un point de départ à travers un trou pilote ou une conduite jusqu'à un lieu d'arrivée, est arrêtée à une extrémité et est reliée à l'extrémité opposée de manière intermittente à un outil et **en ce que** l'outil se déplace graduellement vers l'avant sur la tige de guidage.

26. Procédé à pas de pèlerin destiné à la fabrication ou à l'élargissement de sondages et/ou à la destruction de conduites enterrées ainsi qu'à la pose de nouvelles conduites, **caractérisé en ce qu'**à travers un trou pilote ou une conduite, une tige de traction est poussée jusqu'à un lieu d'arrivée, est bloquée à une extrémité, est équipée d'un outil à l'extrémité opposée et l'outil est déplacé d'une partie vers l'avant de manière répétée sur la tige de guidage, le dispositif d'arrêt est débloqué et la tige est déplacée de manière répétée de la partie de déplacement axialement à partir de l'outil.

27. Procédé selon l'une quelconque des revendications 25 ou 26, **caractérisé en ce que** l'outil est tourné.

28. Procédé selon l'une quelconque des revendications 25 à 27, **caractérisé en ce que** l'outil est chargé par un appareil à vibration et/ou un appareil à percussion.
